# EUROPÄISCHE PATENTSCHRIFT

(11) **EP 1 882 068 B1**
(45) Veröffentlichungstag und Bekanntmachung des Hinweises auf die Patenterteilung: **17.03.2010**
(21) Anmeldenummer: 05801316.0
(22) Anmeldetag: 27.10.2005
(51) Int. Cl.: E04F 15/02, E04F 15/20, D04H 1/46

(54) **PANEELE MIT ZWEILAGIGER TRITTSCHALLDÄMPFUNG**
IMPACT SOUND INSULATION TWO-LAYER PANEL
PANNEAU DOTE D'UNE ISOLATION SONORE, A DEUX COUCHES, CONTRE LES BRUITS DE PAS

(30) Priorität: 07.05.2005 DE 202005007293 U
(43) Veröffentlichungstag der Anmeldung: 30.01.2008
(73) Patentinhaber: Kronoplus Technical AG, 9052 Niederteufen (CH)
(72) Erfinder: DÖHRING, Dieter, Kronospan Lampertswalde GmbH, 01561 Lampertswalde (DE); LEOPOLDER, Christian,, 01561 Lampertswalde (DE)
(74) Vertreter: Heselberger, Johannes
(86) Internationale Anmeldenummer: PCT/EP2005/055604
(87) Internationale Veröffentlichungsnummer: WO 2006/119807

(56) Entgegenhaltungen:
- WO-A-01/09461
- WO-A-93/24295
- WO-A-02/055811
- WO-A-02/100638
- WO-A-03/035396
- WO-A-03/087498
- DE-A1- 3 835 638
- DE-A1- 4 329 766
- DE-C1- 19 620 987
- DE-U1- 20 109 321
- DE-U1- 20 207 218
- US-A- 3 658 633

## Beschreibung

Die Erfindung betrifft ein Paneel und zwar insbesondere starre Paneele mit einer Trittschall dämmenden bzw. Trittschall verbessernden Schicht für einen Fußbodenbelag, wie er in Häusern und Wohnungen vielfach verwendet wird, sowie ein Herstellungsverfahren für das Paneel. Ein aus starren Paneelen gebildeter Fußbodenbelag mit einer trittschalldämmenden Schicht ist aus der Druckschrift WO 01/09461 A1 bekannt.

Ein starrer Fußbodenbelag kann aus Holz, Holzwerkstoffen und/oder aus Kunststoff bestehen. Bekannt sind u. a. Laminatfußböden, die aus einzelnen Paneelen zusammengesetzt sind und schwimmend verlegt werden. Ein einzelnes Paneel umfasst beispielsweise eine tragende aus HDF bestehende Platte sowie eine hierauf aufgebrachte dekorative Schicht, die u. a. für das Aussehen des Fußbodens verantwortlich ist. Im Fall von Parkettpaneelen wird das Dekor durch eine Schicht aus Holz gebildet. Oberhalb des Dekors ist regelmäßig eine transparente Schutzschicht vorgesehen. Unterhalb einer tragenden Platte gibt es regelmäßig eine weitere Schicht, die einen Gegenzug bildet. Im Fall eines Laminatpaneels wird die Gegenzugschicht in der Regel durch ein Papier gebildet. Im Fall eines Parkettpaneels handelt es sich regelmäßig um eine Holzschicht.

Bewegen sich Personen in einem Raum, so entsteht ein Geräusch, welches Trittschall genannt wird. Der Trittschall ist bei einem aus starren Fußbodenpaneelen gebildetem Fußbodenbelag deutlich größer als bei Räumen, die mit Teppichen oder elastischen Bodenbelägen wie PVC ausgelegt sind. Die Geräuschentwicklung, also der Trittschall beruht auf Reflektionen von Stoßwellen, die beim Begehen in den Boden eingeleitet werden. Das Amplitudenspektrum der Stoß- bzw. Schallwellen hängt von den Grenzen zwischen Raum und Boden sowie zwischen Boden und- Untergrund sowie von der Dämpfung in den verschiedenen Schichten ab. Die Geräuschentwicklung ist dann besonders groß, wenn zwischen zwei Schichten, also z. B. zwischen dem Laminatfußböden und dem darunter befindlichen Estrich eine Luftschicht verbleibt.

Um die Geräuschentwicklung beim Begehen herabzusetzen, kann der Trittschall durch Umwandlung in Wärme absorbiert und so gedämpft bzw. gedämmt werden. Eine andere Möglichkeit besteht darin, das Frequenzen zu verschieben. In Abhängigkeit von der Frequenz kann ein Geräusch als angenehm oder unangenehm empfunden werden. Durch Verschiebung von Frequenzen kann erreicht werden, dass der Trittschall als angenehmer wahrgenommen und in diesem Sinn verbessert wird.

Um Trittschall zu dämmen oder zu verbessern, werden verschiedene mattenförmige Materialien wie Noppaschaum, Kork, polymergebundene Matten aus Altgummi und Kork, Wellpappe oder weiche Holzfaservliese als Unterlage unter einem starren Bodenbelag oberhalb des Estrichs eingesetzt, wie aus der WO 01/09461 A1 bekannt ist. Die hierdurch erzielbare schalldämpfende Wirkung ist jedoch unbefriedigend. Daher wurde bereits versucht, die genannten mattenförmigen Materialien direkt auf der Bodenrückseite eines starren Fußbodenbelages, also z. B. auf den Boden eines Fußbodenpaneels zu kleben. Nachteilhaft muss hierfür ein hoher technischer Aufwand betrieben werden. Folglich sind die Kosten hoch. Insgesamt ist die erreichte Schallreduzierung im Verhältnis zum technischen Aufwand unbefriedigend.

So ist aus der Druckschrift DE 196 20 987 CI eine Dämmfolie bekannt, die mit einem Klebestreifen ausgerüstet ist. Es ist vorgesehen, die Dämmfolie auf der Unterseite eines starren Fußbodenbelages aufzukleben, um so eine Geräuschentwicklung beim Begehen des Fußbodens herabzusetzen.

Aus der Druckschrift DE 43 29 766 A1 ist bekannt, einen polymeren Werkstoff zur Trittschalldämmung eines Bodens vorzusehen. Gemäß der Druckschrift DE 38 35 638 A1 wird ein Dämmmaterial aus expandierfähigem Polystyrol als Dämmschicht bei Fußbodenbelägen eingesetzt. Aus der Druckschrift WO 01/09461 A1 ist bekannt, eine Schicht aus thermoplastischem Material fest mit starren Paneelen eines Fußbodenbelags zu verbinden, um so zu guten dämpfenden Eigenschaften zu gelangen. Die WO 93/24295 offenbart die Verwendung einer Schicht aus thermoplastischem Material bei einem dünnen Holzbelag, der biegsam und damit nicht starr im Sinne der vorliegenden Erfindung ist.

Beim Stand der Technik ist in der Regel nachteilhaft eine relativ dicke schalldämpfende Schicht erforderlich, um den gewünschten Effekt zu erzielen. Die Verlegung dicker Fußbodenbeläge ist jedoch regelmäßig in einem Gebäude problematisch, da wegen Türen und Böden in angrenzenden Räumen der Laminatfußboden nicht zu dick sein darf. Andernfalls gibt es Stufen zum angrenzenden Raum oder eine Tür kann nicht mehr geöffnet oder geschlossen werden. Stufen sind aus optischen Gründen unerwünscht. Außerdem stellen sie sogenannte Stolperfallen dar. Türen müssen an die geänderte Fußbodenhöhe angepasst werden.

Gemäß der Druckschrift WO 02/100638 A1 wird vorgeschlagen, neben einer sehr dünnen Schicht aus thermoplastischem Material mit ausgeprägtem Relaxationsverhalten bei Raumtemperatur eine abschließende Papierschicht an der Unterseite eines Paneels vorzusehen. Die Lehre basiert auf dem Gedanken, Schall Innerhalb der thermoplastischen Schicht In Wärme umzuwandeln und zu diesem Zweck durch eine feste Verbindung zwischen dem Paneel und der thermoplastischen Schicht Schall besonders gut In die thermoplastische Schicht hinein zu leiten.

Die DE 202 07 218 U1 beschreibt einen Laminatfußbodenbelag mit einer doppelten Schallschutzschicht. Die beiden Schallschutzschichten sollen aus gleichen oder verschiedenen Materialien gefertigt sein. Als beispielhafte Materialien für die beiden Schallschutzschichten schlägt dieses Gebrauchsmuster Materialien wie Karton, Pappe, Wellpappe bzw. Vliese auf Basis von Zellulosefasern, Holzfasern, Hanf, Kokos, Sisal, Jute und Flachs vor. Thermosplastische Materialien werden nicht erwähnt.

Die WO 03/087498 beschreibt einen Fußbodenbelag der einen tragenden Kern aus zwei Materialschichten aufweist, die in einem unterschiedlichen Abstand von der Oberfläche des Fußbodenbelags eingerichtet sind und deren Materialeigenschaften und Zusammensetzung sich unterscheiden. Durch diesen Aufbau sollen die Herstellkosten des Fußbodenbelags reduziert werden und die Trittschalleigenschaften verbessert werden. Als Materialien für die beiden Schichten kommen MDF oder HDF Werkstoffe beispielsweise in Frage.

Die WO 02/055811 betrifft eine Schalldämmmatte für Bodenbeläge, wobei die Mattenschicht Naturrohstofffasern aufweist, die innerhalb der Mattenschicht inhomogen verteilt angeordnet sind, so dass von der Mattenunterseite zur Mattenoberseite eine ansteigend dichte Verteilung vorliegt. Die Schalldämmmatte soll unter einem Fußbodenbelag, wie etwa einem Parkettboden oder einem Laminatboden, verlegt werden.

Die DE 201 09 321 U1 beschreibt ein Paneel mit einer zweilagigen Schallschutzschicht, wobei als zweite schalldämmende Schicht ein Kunststoff aus PE, PP oder PUR vorgeschlagen wird. Die DE 201 09 321 U1 gibt dem Fachmann jedoch keine genaueren Angaben zur Materialeigenschaft der verwendeten Materialien, die stark von dem Polymerisationsgrad abhängig sind.

Es ist Aufgabe der Erfindung, einen Fußbodenbelag mit einer Schalldämmung bereitzustellen.

Die Aufgabe der Erfindung wird durch einen Fußbodenbelag mit den Merkmalen des ersten Anspruches gelöst. Vorteilhafte Ausgestaltungen ergeben sich aus den nachgeordneten Ansprüchen.

Ein Paneel für einen Fußbodenbelag nach Anspruch 1 ist mit zwei Schichten verbunden, die der Dämmung oder Verbesserung von Trittschall dienen. Die eine der beiden Schichten besteht aus einer aus Fasern gebildeten Matte und die andere aus thermoplastischem Material.

Thermoplastisches Material ist ein solches, weiches sich bei Überschreiten einer materialabhängigen Temperatur erweicht und fließfähig wird. In diesem Zustand ist das Material verformbar und kann auf die Unterselte des Fußbodenbelages bzw. auf die Unterseite der weiteren schalldämmenden bzw. schallverbessernden Schicht durch Streichen oder Aufwalzen aufgebracht und so im Sinne der Erfindung fest mit dem Fußbodenbelag verbunden werden. Wird die materialabhängige Temperatur unterschritten so verfestigt sich das thermoplastische Material. Das thermoplastische Material ist so ausgewählt, dass dieses ein besonders ausgeprägtes Relaxationsverhalten bei Raumtemperatur zeigt, also den Trittschall bei Raumtemperatur besonders gut zu absorbieren vermag.

Beispiele für thermoplastische Polymere mit ausgeprägtem physikalischen Reiaxationsverhalten im Raumtemperaturbereich sind Polyvinylpropionat oder Polyvinylacetat. Dagegen ist beispielsweise Polycarbonat mit seiner hohen Glastemperatur ein völlig ungeeignetes Material. Messtechnisch zeigen geeignete Materialien beispielsweise bei der Darstellung des Torsionsmoduls in Abhängigkeit von der Temperatur im Verlustmodul tan δ im Raumtemperaturbereich bzw, unmittelbar angrenzenden Temperaturbereichen ein ausgeprägtes Maximum. Die physikalischen Grundlagen einschließlich beispielhafter Kurven enthalten Lehrbücher der Polymerphysik wie beispielsweise: Chemie, Physik und Technologie der Kunststoffe Band 6, Kunststoffe 1 - Struktur und physikalisches Verhalten der Kunststoffe -. Kapitel 4; K. A. Wolf, Springer -Verlag 1962.

Zeigt das Material ein ausgeprägtes physikalisches Relaxationsverhatten Im Raumtemperaturbereich, so wird eine besonders gute Dämpfung erzielt, da besonders gut kinetische Energie in Wärme umgewandelt wird.

Beispiele für Materialien, die ein besonders gutes Relaxationsverhalten bei Raumtemperatur zeigen, sind:
Polyvinylformale, Polyvinylbutyrale, Polyvinyläther, Polyisobutene oder Copolymerisate wie z. B. Terpolymerisate aus Acrylnitril, Butadien und Styrol (ABS), Copolymere aus Vinylchlorid und 2-Athylhexylacrylat, Copolymere aus Vinylacetat und Vlnyllaurat oder auch Polymermischungen dieser Polymere auch unter Zusatz typischer Polymerweichmacher.

In einer Ausführungsform der Erfindung befindet sich die Schicht aus thermoplastischem Material unterhalb weiteren den Trittschall dämmenden bzw. verbessernden Schicht, so vor allem unter der aus Fasern gebildeten Matte. Die Aufgabe der Erfindung wird im Vergleich zum Stand der Technik besonders gut gelöst, was den Fachmann aus folgendem Grund überrascht: Das thermoplastische Material wandelt Schall in Wärme um und dämpft so den Trittschall, wie den Druckschriften WO 01/09461 A1 sowie WO 02/100638 A1 zu entnehmen ist. Dies gilt vor allem für solche thermoplastischen Materialien, die ein ausgeprägtes Relaxationsverhalten bei Raumtemperatur zeigen. Damit nun durch Begehen eines Fußbodenbelags entstehende Schall auch tatsächlich in der thermoplastischen Schicht durch Umwandlung in Wärme absorbiert wird, muss der Schall möglichst vollständig in die Schicht aus thermoplastischem Material hinein gelangen. Damit der Schall möglichst vollständig hineingelangt, muss dieser auf seinem Weg von der Oberfläche des Fußbodenbelags nach unten aufgrund von Grenzflächen möglichst wenig reflektiert werden. Grenzflächen sind also nach Möglichkeit zu vermeiden.

In der vorgenannten Ausführungsform wird nun durch Vorsehen der weiteren den Trittschall dämmenden oder verbessernden Schicht eine zusätzliche Grenzschicht erzeugt, die es nach fachmännischem Wissen eigentlich zu vermeiden galt. Es überrascht daher, dass trotz der zusätzlichen Grenzschicht insgesamt ein besseres Ergebnis erzielt werden kann und zwar insbesondere im Vergleich zu den aus den Druckschriften WO 01/09461 A1 sowie WO 02/100638 A1 bekannten Beispielen. Dies gilt vor allem im Fall einer aus Fasern bestehenden Matte.

In einer Ausführungsform der Erfindung umfasst das Paneel eine tragende Platte, und auf der Oberseite befindet sich ein Dekor beispielsweise in Form eines bedruckten Papiers. Das Dekor kann auch durch andere Materialien wie Holz bereitgestellt sein. Ein solches Paneel umfasst regelmäßig seitlich Kupplungselemente wie Nuten und Federn. Vor allem sind die Kupplungselemente so ausgestaltet, dass ein Paneel mit einem weiteren ohne Verwendung von Leim vor allem auch parallel zur Oberfläche des Fußbodenbelags verbunden werden kann. Das Paneel kann an der Unterseite eine als Gegenzug dienende Schicht umfassen. Dies besteht vor allem dann aus Papier, wenn das Dekor bereits durch ein bedrucktes Papier bereitgestellt wurde. Die als Gegenzug dienende Schicht besteht vor allem dann aus Holz, wenn das Dekor durch eine aus Holz bestehende Schicht bereit gestellt wird.

In einer Ausführungsform der Erfindung befinden sich die zwei Schichten, die der Verbesserung bzw. Dämpfung des Trittschalls dienen, benachbart zur tragenden Platte und zwar vor allem an der Unterseite. Diese grenzen dann entweder unmittelbar an die tragende Platte an oder aber an die als Gegenzug dienende Schicht.

Es ist aber auch möglich, die zwei Schichten, die der Verbesserung bzw. Dämpfung des Trittschalls dienen, beispielsweise auf der Oberseite der tragenden Platte anzubringen. Dann wird der Trittschall direkter absorbiert. Die Oberfläche des Fußbodenbelags ist dann aber mechanisch weniger widerstandsfähig.

Die Schicht aus thermoplastischem Material sowie die weitere schalldämmende bzw. schallverbessernde Schicht sind in einer Ausführungsform fest beispielsweise durch Verkleben mit dem Paneel verbunden. So machen sich Grenzflächen weniger störend bemerkbar.

Die eine schalldämmende Schicht umfasst insbesondere Holzfasern, wobei die Fasern miteinander verleimt sind. Diese aus Fasern gebildete Matte unterscheidet sich von einer HDF- oder MDF- Platte durch längere Fasern, die sich umschlingen. Die Fasern der Matte sind in einer Ausführungsform bis zu 15 mm lang. Durch die Umschlingung kann wird ein Zusammenhalt erreicht. Daher kann der Leimanteil im Vergleich zum Leimanteil in einer HDF- bzw. MDF - Platte deutlich gesenkt werden. Im Vergleich zu einer LDF - Platte ist die erfindungsgemäße Matte deutlich blasenfreier. In einer Ausführungsform der Erfindung beträgt das Gewicht einer 2 mm bis 2,5 mm dicken Matte im Sinne der Erfindung 5 bis 10 kg pro Quadratmeter, so zum Beispiel 7,5 kg/m².

Um Fasern für eine Faser-Platte wie HDF, MDF oder LDF herzustellen, werden Holzspäne zunächst gekocht und anschließend die gekochten Holzspäne gemahlen. Bei der Herstellung der Fasern für die erfindungsgemäße Matte werden die Holzspäne relativ kurz gekocht und/ oder relativ kurz gemahlen im Vergleich zur Herstellung von Fasern für eine HDF-, MDF oder LDF - Platte. So resultieren gröbere und vor allem längere Fasern.

In einer weiteren Ausgestaltung der Erfindung weist die Matte eine glatte und eine raue Oberfläche auf. Die thermoplastische Schicht ist mit der glatten Seite der Matte verbunden. Die Seite mit der rauen Oberfläche ist an dem Paneel angebracht. Die Dämmung von Schall wird so weiter verbessert.

Die Matte wird bevorzugt in einer Kalanderpresse hergestellt, Es entsteht so eine glatte und eine raue Seite im Sinne der vorgenannten Ausführungsform.

In einer weiteren vorteilhaften Ausgestaltung der Erfindung wird das thermoplastische Material so gewählt, dass es adhäsive Eigenschaften aufweist. Adhäsion ist ein polymertypischer Fachbegriff. Ein Beispiel für ein Material, welches im Sinne der Erfindung adhäsive Eigenschaften aufweist, sind thermoplastische Kautschuke.

Wird das Material so gewählt, dass es adhäsive Eigenschaften aufweist, so haftet es erwünscht auf der weiteren Schicht. Lufteinschluss zwischen der weiteren Schicht und der thermoplastischen Schicht wird so vermieden. Schall wird daher entsprechend gut gedämpft.

Die schalldämpfenden Eigenschaften sind dann in einer Ausführungsform besonders gut, wenn ein sehr festes, dünnes Papier eingesetzt wird, welches unterhalb der thermoplastischen Schicht angebracht ist. Aus diesem-Grunde liegt das Papiergewicht vorteilhaft bei lediglich 10 bis 50 g/m². Um zu einem besonders festen Papier zu gelangen, ist dieses vorteilhaft mit einem Kunstharz imprägniert. Das Kunstharz ist insbesondere in das Innere des Papiers zum Beispiel durch Hineinpressen gebracht worden. Das Papier ist vorzugsweise mit Acrylat imprägniert worden, welches sich vorteilhaft im Inneren des Papiers befindet. Das Papiergewicht beträgt dann bevorzugt nicht mehr als 30 g/m².

Eine feste, dünne weitere Schicht, also zum Beispiel ein festes Papier mit geringem Gewicht einzusetzen, hat ferner den Vorteil, dass durch die weitere Schicht die Gesamtdicke des Paneels kaum gesteigert wird.

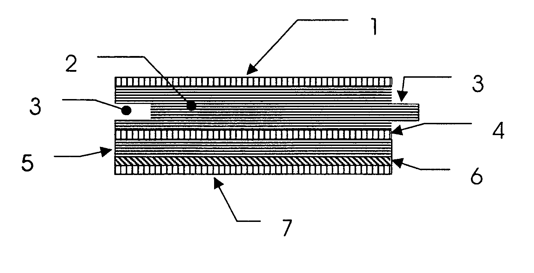

In Figur 1 wird ein besonders bevorzugter Aufbau verdeutlicht.

Die Oberseite des Paneels umfasst eine Dekorschicht aus Papier und einer darauf aufgebrachten, transparenten, abriebfesten Schicht 1 , Diese Schicht 1 ist mit einer HDF - Platte 2 verbunden, die 3 bis 15 mm dick sein kann und an sämtlichen vier Seiten mit Kupplungsmitteln 3 versehen ist. Die Kupplungselemente 3 dienen dem Verbinden von Paneelen. Diese sind vor allem so beschaffen, dass Paneele eines Belages leimfrei miteinander verbunden werden können.

Unterhalb der HDF-Platte ist ein Papier 4 angebracht, das als Gegenzug gegenüber dem Dekorpapier 1 dient. Unterhalb der Gegenzugpapiers 4 ist eine Matte 5 angebracht, die im Vergleich zur HDF-Platte längere Fasern und einen geringeren Leimanteil aufweist. Diese Matte ist frei von Lufteinschlüssen. Lufteinschlüsse verbleiben bei einer LDF-Platte. Die Matte ist bevorzugt 1 bis 4 mm dick und jedenfalls insbesondere dünner im Vergleich zur Trägerplatte 2. Unterhalb der Matte 5 befindet sich die Schicht aus thermoplastischem Material 6, die sehr dünn ist und zwar insbesondere 0,1 bis 1 mm dünn ist, An die Unterseite der Schicht aus thermoplastischem Material ist ein Papier 7 angebracht.

Für die Herstellung wird zunächst eine tragende große Platte mit einer Dekorschicht auf der einen und einem Gegenzug sowie der Matte beschichtet und zwar in der Regel durch Verpressen. Vorteilhaft wird zusätzlich die Schicht aus thermoplastischem Material aufgetragen und dieses mit Papier nach unten bevorzugt abgeschlossen. Anschließend wird die große Platte so zersägt, dass eine Vielzahl kleinerer Platten resultieren, die der Größe der Paneele entsprechen. Seitlich werden Kupplungselemente wie Nuten, Federn und weitere Verriegelungselemente gefräst. Falls nicht bereits geschehen, wird abschließend eine thermoplastische Schicht angebracht, die besonders bevorzugt mit einer Papierschicht nach unten abgedeckt wird.

Indem die Matte vor dem Zersägen mit der großen Platte verbunden wird, wird ein bündiger Randabschluss bei den späteren Paneelen sicher gestellt. Im Bereich der Kupplungselemente ist ein solcher Randabschluss von Vorteil, da andernfalls die Kupplungselemente beispielsweise beim Begehen des Fußbodens entsprechend stärker nach unten gedrückt werden könnten, was Ermüdungserscheinungen fördert. Dies gilt vor allem für solche Kupplungselemente, die ein leimloses Verbinden von zwei Paneelen bewirken. Aus diesem Grund ist es auch von Vorteil, noch vor dem Zersägen bereits die weiteren Schichten unterhalb der Matte aufzutragen. Da diese beiden weiteren Schichten selbst zusammen sehr dünn sind, ist dieser Einfluss auf Ermüdungserscheinungen geringer.

## Patentansprüche

1. Paneel für einen Fußbodenbelag mit mindestens zwei verschiedenen Schichten (5, 6), die eine Verbesserung des Trittschalls bewirken, wobei die erste den Trittschall verbessernde Schicht (5) eine aus Fasern gebildete Matte ist, die bevorzugt frei von Lufteinschlüssen ist, und die zweite Schicht (6) aus thermoplastischen Material besteht und unterhalb der ersten Schicht angeordnet ist, **dadurch gekennzeichnet, dass** die zweite, den Trittschall verbessernde Schicht (6) aus thermoplastischem Material besteht, welches bei Raumtemperatur ein ausgeprägtes Relaxationsverhalten zeigt und frei von Lufteinschlüssen ist.

2. Paneel nach einem der vorhergehenden Ansprüche, bei dem das Paneel eine tragende Platte (2), eine Dekorschicht (1) an der Oberseite der tragenden Platte und bevorzugt eine Gegenzugschicht (4) unterhalb der tragenden Platte umfasst.

3. Paneel nach einem der vorhergehenden Ansprüche, bei dem die tragende Platte seitlich mit Kupplungselementen versehen ist und 3 bis 15 mm dick ist und aus HDF, MDF oder Spanplatte besteht.

4. Paneel nach einem der vorhergehenden Ansprüche, an dessen Unterseite die Trittschall verbessernden Schichten angebracht sind und zwar zunächst eine aus Holzfasern und Leim gebildete Matte (5) und darunter eine Schicht aus thermoplastischem Material (6).

5. Paneel nach einem der vorhergehenden Ansprüche, bei dem an der Unterseite der Trittschall verbessernden Schichten ein Papier angebracht ist.

6. Paneel nach einem der vorhergehenden Ansprüche, bei dem eine Matte als Trittschall verbessernde Schicht vorhanden ist mit bis zu 15 mm langen Fasern, die sich teilweise umschlingen.

7. Paneel nach einem der vorhergehenden Ansprüche, bei dem die Fasern in einer Matte (5) länger sind als Fasern, aus denen eine tragende Platte (2) des Paneels gebildet ist und der Leimanteil in der Matte (5) geringer ist als der Leimanteil in der tragenden Platte (2).

8. Paneel nach einem der vorhergehenden Ansprüche, an das eine Matte (5) angebracht ist, die 1 bis 4 mm dick ist und eine Schicht aus thermoplastischem Material, die 0, 1 bis 1 mm dick ist.

## Claims

1. Panel for a floor covering with at least two different layers (5, 6) which achieve an improvement of the footstep sound, wherein the first layer (5) improving the footstep sound is a mat built from fibers, which is preferably free from any inclusions of air, and wherein the second layer (6) consists of thermoplastic material and is arranged underneath the first layer, **characterized in that** the second layer (6) improving the footstep sound consists of thermoplastic material, which displaces in particular at ambient temperature a marked relaxation behavior and is free from any inclusion of air.

2. Panel according to anyone of the preceding claims, wherein the panel comprises a supporting board (2), a décor layer (1) at the upper surface of the supporting board and preferably a counteracting layer (4) underneath the supporting board.

3. Panel according to anyone of the preceding claims, wheréin the supporting board is provided laterally with coupling elements and has a thickness of 3 to 15 mm and consists of HDF, MDF or chip board.

4. Panel according to anyone of the preceding claims, wherein the layers improving the footstep sound are arranged at its bottom side, and firstly a mat (5) made from wood fibers and glue and a layer of thermoplastic material (6) there under.

5. Panel according to anyone of the preceding claims, wherein at the bottom side of the layers improving the footstep sound a paper is arranged.

6. Panel according to anyone of the preceding claims, wherein a mat is present as layer for improvement of footstep sound having fibers with a length of up to 15 mm, which partially entangle each other.

7. Panel according to anyone of the preceding claims, wherein the fibers in a mat (5) are longer than the fibers, from which the supporting board (2) of the panel is made and wherein the amount of glue in the mat (5) is lower than the amount of glue in the supporting board (2).

8. Panel according to anyone of the preceding claims, onto which a mat (5) is arranged, with a thickness of 1 to 4 mm and a layer of thermoplastic material with a thickness of 0.1 to 1 mm.

## Revendications

1. Panneau pour un revêtement de sol, comprenant au moins deux couches différentes (5, 6) qui ont pour effet d'atténuer le bruit de pas, la première couche atténuant le bruit de pas (5) étant une nappe qui est formée de fibres et qui, de préférence, est dépourvue d'inclusions d'air, et la seconde couche (6) étant constituée de matière thermoplastique et étant disposée sous la première couche, **caractérisé en ce que** la seconde couche atténuant le bruit de pas (6) est réalisée en une matière thermoplastique qui, à température ambiante, présente un comportement de relaxation marqué et est dépourvue d'inclusions d'air.

2. Panneau selon une des revendications précédentes, dans lequel le panneau comprend une plaque de support (2), une couche décorative (1) sur le dessus de la plaque de support et, de préférence, une couche de contre-traction (4) sous la plaque de support.

3. Panneau selon une des revendications précédentes, dans lequel la plaque de support est munie latéralement d'éléments d'accouplement et présente une épaisseur de 3 à 15 mm et est réalisée en HDF, en MDF ou en panneau de particules.

4. Panneau selon une des revendications précédentes, sur le dessous duquel sont appliquées les couches atténuant le bruit de pas et, plus précisément, d'abord une nappe (5) formée de fibres de bois et de colle et, en dessous, une couche en matière thermoplastique (6).

5. Panneau selon une des revendications précédentes, dans lequel un papier est appliqué sur le dessous des couches atténuant le bruit de pas.

6. Panneau selon une des revendications précédentes, dans lequel une nappe fait fonction de couche atténuant le bruit de pas et possède des fibres jusqu'à 15 mm de long qui s'enroulent partiellement.

7. Panneau selon une des revendications précédentes, dans lequel les fibres dans une nappe (5) sont plus longues que les fibres qui constituent une plaque de support (2) du panneau, et la proportion de colle dans la nappe (5) est inférieure à la proportion de colle dans la plaque de support (2).

8. Panneau selon une des revendications précédentes, sur lequel sont appliquées une nappe (5) d'une épaisseur de 1 à 4 mm et une couche en matière thermoplastique d'une épaisseur de 0,1 à 1 mm.
